Europäisches Patentamt

European Patent Office

Office européen des brevets

(19)

(11) Veröffentlichungsnummer: **0 062 138**
**B1**

(12) **EUROPÄISCHE PATENTSCHRIFT**

(45) Veröffentlichungstag der Patentschrift:
**18.12.85**

(21) Anmeldenummer: **82100463.7**

(22) Anmeldetag: **23.01.82**

(51) Int. Cl.⁴: **C 08 J 3/06,** C 08 K 3/32,
C 08 L 67/00, C 08 L 77/00,
C 09 D 3/00, C 09 D 3/64,
C 09 D 3/70

(54) **Wässriges Überzugsmittel.**

(30) Priorität: **26.03.81 DE 3111902**

(43) Veröffentlichungstag der Anmeldung:
**13.10.82 Patentblatt 82/41**

(45) Bekanntmachung des Hinweises auf die Patenterteilung:
**18.12.85 Patentblatt 85/51**

(84) Benannte Vertragsstaaten:
**AT BE CH FR GB IT LI LU NL SE**

(56) Entgegenhaltungen:
**EP - A - 0 013 244**
**DE - A - 2 407 620**
**GB - A - 1 275 389**
**US - A - 3 496 127**

(73) Patentinhaber: **HÜLS AKTIENGESELLSCHAFT,**
**Patentabteilung / PB 15 - Postfach 13 20,**
**D-4370 Marl 1 (DE)**

(72) Erfinder: **Bax, Hanns-Jörg, Dr., Lipper Weg 193,**
**D-4370 Marl (DE)**
Erfinder: **Grüber, Willi, Dr., Am Schmöningsberg 1,**
**D-4358 Haltern (DE)**

## Beschreibung

Gegenstand der Erfindung ist ein wässriges Überzugsmittel, welches durch Einbringen von

a) einem Kunststoffpulver,
b) einem Salz einer Polyphosphorsäure,
c) einem Verdickungsmittel,
d) weiteren Hilfs- und Zusatzstoffen

in Wasser und durch Mischen der Komponenten im Wasser erhalten wird.

Es ist bekannt, aus Kunststoffpulvern wässrige Dispersionen herzustellen, die zum Überziehen von Metallen geeignet sind. So werden z.B. Polymere wie Epoxidharze nach Pulverisierung in Form wässriger Suspensionen zum Überziehen von Metallen eingesetzt (Modern Paint and Coatings 69 (6), 53 bis 55, 1979). Die hier beschriebenen Überzugsmittel sind jedoch nur begrenzt lagerstabil, erfordern definierte Einbrennbedingungen und führen zu nicht optimal verlaufenden Überzügen.

Entsprechend DE-PS 2 407 620 können auch Pulver aus Thermoplasten in wässrige Dispersionen übergeführt werden. Die dort beschriebene Dispersion aus Polyamidpulver mit Korndurchmessern von 40 bis 100 µm ist jedoch nur wenige Tage stabil und sedimentiert dann, wodurch eine Anwendung als Überzugsmittel erschwert wird. Ausserdem lassen sich mit dem verwendeten Pulver wegen der Korndurchmesser von 40 bis 100 µm nur dann glatte Überzüge herstellen, wenn die Schichtdicke mindestens etwa 100 µm beträgt.

US-PS 3 496 127 beschreibt gleichfalls die Verwendung von Kunststoffpulvern in wässrigen Dispersionen. Dabei wird von sehr grossen Teilchen ausgegangen. Wesentliches Hilfsmittel zum Erreichen stabiler Dispersionen sind Verdickungsmittel. Tenside werden zwar eingesetzt; insbesondere nichtionische Tenside werden aber nur fakultativ vorgeschlagen.

Aus GB-PS 1 275 389 sind gleichfalls analoge Dispersionen bekannt. Sämtliche Massnahmen sind aber eng auf den ausschliesslichen Einsatz eines einzigen Polymertyps (Polyamid) abgestimmt. Dieser wiederum ist auf einen festgelegten Schmelzpunktbereich und auf relativ kleine Teilchen beschränkt. Darüber hinausgehende Teilchengrössen sollen zu schlechteren Ergebnissen führen.

Aufgabe der vorliegenden Erfindung war es, ein wässriges Überzugsmittel zu entwickeln, das mehrere Monate bei Raumtemperatur stabil ist und mit dem gut verlaufende Überzüge bis zu einer Schichtdicke von 10 µm, wie sie von der Praxis gefordert werden, hergestellt werden können.

Diese Aufgabe wurde dadurch gelöst, dass

A. Komponente a) in einer Menge von 20 bis 60 Gew.-% bei einem Korndurchmesser von 5 bis 30 µm,

B. Komponente b) in einer Menge von 0,2 bis 5 Gew.-%,

C. Komponente c) in einer Menge von 0,03 bis 1 Gew.-% und

D. ein Stoff der Komponente d) ein nichtionisches Tensid ist und in einer Menge von 0,1 bis 1 Gew.-%

enthalten ist, wobei sich die Mengenangaben der Komponente a) auf das Gemisch aus Kunststoffpulver und Wasser und die der Komponenten b) bis d) auf das Kunststoffpulver beziehen.

Als Kunststoffpulver (Komponente a) können alle üblichen thermoplastischen Polymere, wie z.B. Polyacrylnitril, Polyester, Polyvinylketone, Polyvinylchlorid bzw. -fluorid, Polyacrylate, Polyvinylester bzw. -äther, Polyvinylidenchlorid bzw. -fluorid, Polystyrol, Styrol/Butadien-Copolymerisate, Polyamide, beispielsweise aus Laurinlactam, Caprolactam oder auch Terpolyamide, verwendet werden. Ebenfalls geeignet sind vernetzbare, pulverförmige Kunststoffe wie ungesättigte Polyesterharze, Epoxiharze und Aminoplaste. Bevorzugte pulverförmige Kunststoffe sind thermoplastische Polymere, wobei ganz besonders Polyester und Polyamide bevorzugt werden. Ebenfalls geeignet sind Gemische der einzelnen Kunststoffpulver miteinander.

Die erfindungsgemäss einzusetzenden Kunststoffpulver sollen bei der Mischtemperatur formbeständig und nicht klebend sein. Darüber hinaus müssen sie wasserunlöslich sein.

Die Kunststoffpulverteilchen haben einen bevorzugten Korndurchmesser von 5 bis 30 µm.

Als Salze von Polyphosphorsäuren (Komponente b) kommen handelsübliche Natrium-, Kalium- oder Ammoniumsalze in Frage. Sie werden in Mengen von 0,2 bis 5 Gew.-%, vorzugsweise in Mengen von 0,5 bis 3 Gew.-%, eingesetzt.

Unter Polyphosphorsäuren werden Di- und Polyphosphorsäuren verstanden, wie sie in Hollemann-Wiberg, Lehrbuch der anorganischen Chemie, 37. bis 39. Auflage, auf Seite 265 (Abschnitt β) bis Seite 269 beschrieben sind.

Als Verdickungsmittel (Komponente c) können handelsübliche Produkte wie z.B. Methylcellulose, Hydroxiethylcellulose, Ammoniumsalze von Polyacrylsäuren, Mischpolymerisate des Vinylpyrrolidons o.ä. eingesetzt werden. Sie werden in Mengen von 0,03 bis 1 Gew.-%, vorzugsweise in Mengen von 0,03 bis 0,5 Gew.-%, verwendet. Bei Kunststoffpulvern mit hohem Schmelzpunkt müssen entsprechend wärmebeständige Verdickungsmittel verwendet werden.

Als nichtionische Tenside können handelsübliche Produkte wie Polyoxyalkylenether bzw. -ester von langkettigen Alkoholen, Alkylphenolen, Carbonsäuren o.ä. eingesetzt werden. Derartige Tenside werden in Tenside Detergents 16 (1979), Seite 175, und in J. Colloid Interface Sci. 56 (1976), Seiten 227 bis 232, beschrieben. Sie werden in Mengen von 0,1 bis 1 Gew.-%, vorzugsweise in Mengen von 0,1 bis 0,5 Gew.-%, eingesetzt.

Als Komponente d) können neben Tensiden noch andere übliche Hilfs- und Zusatzstoffe wie Füllstoffe, Pigmente, Antischaummittel, Korrosionsinhibitoren o.ä. eingesetzt werden.

Die erfindungsgemäss genannten Grenzen sind kritisch. So sind Überzugsmittel mit Korndurchmessern der Kunststoffteilchen von >40 µm nur wenige Tage stabil, und es können keine Überzüge auch mit geringen Schichtdicken (<80 µm) erzeugt werden. Zu geringe Mengen Polyphosphorsalz, Verdickungsmittel oder nichtionisches Tensid führen zu instabilen Überzugsmitteln.

Zu hohe Anteile an Polyphosphorsalz ergeben Überzüge mit verminderter Korrosionsschutzwirkung und geringer Flexibilität. Zu grosse Mengen Verdickungsmittel führen leicht zu Überzügen, die beim Einbrennen vergilben.

Grundsätzlich sollte der Fachmann darauf achten, möglichst wenig der Zusatzstoffe einzusetzen. Wenige Vorversuche zeigen bereits die optimal notwendigen Mengen an.

In welcher Weise die Komponenten miteinander vermischt werden, ist im allgemeinen gleichgültig. Zweckmässig ist es jedoch, zunächst die Additive in Wasser zu lösen und dann das Kunststoffpulver zu verteilen. Man kann jedoch auch jede beliebige andere Reihenfolge wählen.

Der pH-Wert der wässrigen Lösung ist erfindungsgemäss nicht kritisch. Jedoch erfordern die eingesetzten Verdickungsmittel einen bestimmten pH-Wert, um wirksam zu werden. Diese Zusammenhänge sind dem Fachmann bekannt. Üblicherweise wird deswegen im alkalischen Bereich bei pH-Werten von 8 bis 10 gearbeitet. Es ist jedoch auch möglich – bei Einsatz geeigneter Verdickungsmittel, wie z.B. Mischpolymerisaten des Vinylpyrrolidons – im sauren Bereich bei pH-Werten von 3 bis 6 die Kunststoffpulver zu verteilen.

Die erfindungsgemässen Überzugsmittel können z.B. zum Überziehen von Metallen, Glas, Keramik o.a. eingesetzt werden. Dabei werden sie durch übliche Verfahren wie Streichen, Spritzen, Tauchen etc. appliziert. Das überzogene Substrat wird wärmebehandelt, um das Wasser zu verdampfen. Vorzugsweise werden sofort Temperaturen gewählt, die oberhalb des jeweiligen Polymerschmelz- bzw. Vernetzungsbereiches liegen. Zumindest müssen Temperaturen >110°C gewählt werden.

Die erfindungsgemässen Überzugsmittel besitzen im Vergleich zu analogen Pulverlacken den Vorteil, dass das Risiko von Staubexplosionen ausgeschlossen wird und dass bei geringerem apparativen Aufwand dünnere Schichten erhalten werden. Ferner können die üblichen Verluste an Pulver bei der Applikation vermieden werden.

Zum anderen sind die erfindungsgemässen Überzugsmittel im Gegensatz zu analogen Produkten, die ebenfalls von festem Pulver ausgehen, über Monate stabil. Dadurch können die Überzugsmittel in grossen Ansätzen bei dem Rohstoffhersteller in bestmöglicher Weise hergestellt werden. Bisher war es aufgrund der geringen Stabilität und der hohen Neigung zum Absetzen und Verklumpen nur möglich, die Überzugsmittel kurze Zeit vor dem Auftragen anzusetzen.

Die voranstehend genannten Prozentangaben beziehen sich auf das Gewicht. Die Mengenangaben für die Komponente a) (Kunststoffpulver) beziehen sich auf das Gemisch aus Kunststoffpulver und Wasser, während die Angaben für die anderen Komponenten auf die Menge an eingesetztem Kunststoffpulver bezogen sind.

Beispiele

Bei den folgenden Beispielen wurden für den Korndurchmesser der Pulver die Grenzen angegeben, in denen nach der Microtrac-Analyse >97 Gew.-% des Pulvers lagen.

Bei dem Polyamid wurde die Viskosität in einer 0,5-%igen m-Kresol-Lösung bestimmt. Die Viskosität des Polyesters wurde in einer 0,23-%igen Lösung von Phenol/1.1.2.2-Tetrachlorethan = 60/40 Gew.-% gemessen.

Zur Herstellung der Überzugsmittel wurden nachstehende Pulver eingesetzt:

Pulver 1:

Polylaurinlactam, gefällt aus Dimethylformamid, Korndurchmesser 5 bis 28 µm, Schmelzpunkt 179°C, $\eta_{rel}$ = 1,6.

Pulver 2:

Polylaurinlactam, kaltgemahlen, Korndurchmesser 5 bis 30 µm, Schmelzpunkt 179°C, $\eta_{rel}$ = 1,65.

Pulver 3:

Copolyamid aus 80 Teilen Laurinlactam und 20 Teilen Caprolactam, kaltgemahlen, Korndurchmesser 6 bis 29 µm, Schmelzpunkt 165°C, $\eta_{rel}$ = 1,6.

Pulver 4:

Copolyester aus 44 Teilen Terephthalsäure, 13 Teilen Hexahydroterephthalsäure, 9 Teilen Dodecandisäure und 34 Teilen 1,4-Butandiol, gefällt aus Butyrolacton, Korndurchmesser 5 bis 30 µm, Schmelzpunkt 177°C, $\eta_{red}$ = 1 dl/g.

Pulver 5:

Polylaurinlactam, gefällt aus Dimethylformamid, Korndurchmesser 42 bis 90 µm, Schmelzpunkt 179°C, $\eta_{rel}$ = 1,6.

Zur Herstellung des Überzugsmittels wurden zunächst die Additive in den in der Tabelle angegebenen Mengen in Wasser gelöst und dann 80 g Kunststoffpulver in diesen Lösungen dispergiert. Alle Überzugsmittel – ausgenommen Versuch B – enthielten 0,1 Gew.-%, bezogen auf das Kunststoffpulver, eines handelsüblichen Entschäumers.

Das Überzugsmittel wurde mit einer Rakel (200 µm-Spalt) auf 1 mm dicke zinkphosphatierte Bleche aufgetragen. Bei Einsatz der Pulver 1, 2 und 4 wurde bei 185°C, bei Pulver 3 bei 170°C/10 min im Umluftofen gut verlaufene Überzüge (Schichtdicke: 50 bis 70 µm) mit hoher Elastizität erhalten: Schlagtiefung aller Überzüge >137,6 cm · Kg (160 in · lbs) gemäss ASTM D 2794. Das Überzugsmittel aus Pulver 5 wird mit einer Rakel (200 µm-Spalt) auf gebonderte Bleche aufgetragen und bei 185°C/10 min eingebrannt. Es werden keine kraterfreien Schichten erhalten.

Tabelle 1

| Versuch | Pulver | Pulver in der Dispersion [%][1] | NaPP[3] [%][2] | DNP 16[4] [%] | COLL[5] [%] | LATE[6] [%] | Stabilität 3 Monate 20°C | 14 Tage 50°C |
|---|---|---|---|---|---|---|---|---|
| 1 | 1 | 38 | 1 | 0,2 | 0,1 | – | stabil | stabil |
| 2 | 1 | 35 | 1 | 0,25 | 0,15 | – | stabil | stabil |
| 3 | 1 | 33 | 0,5 | 0,2 | 0,15 | – | stabil | stabil |
| 4 | 2 | 40 | 1 | 0,25 | 0,15 | – | stabil | stabil |
| 5 | 3 | 35 | 0,5 | 0,2 | 0,15 | – | stabil | stabil |
| 6 | 3 | 35 | 0,5 | 0,2 | – | 0,2 | stabil | stabil |
| 7 | 4 | 35 | 1 | 0,2 | 0,2 | – | stabil | stabil |
| 8 | 4 | 35 | 1 | 0,2 | – | 0,2 | stabil | stabil |
| A | 1 | 33 | – | 0,2 | 0,15 | – | fest | fest |
| B | 1 | 38 | 1 | 0,2 | 0,1 | – | schaumig | schaumig |
| C | 3 | 35 | 1 | 0,2 | – | – | 15%[7] | 12%[7] |
| D | 4 | 35 | 0,5 | 0,2 | – | – | 20%[7] | 18%[7] |
| E | 5 | 27 | – | – | 1,5 | – | fest | fest |
| F* | 5 | 27 | 1 | – | 0,3** | – | 25%[7] | 25%[7] |

\* entspricht Beispiel 8 in DE-PS 2 407 620
\*\* Hydroxyethylcellulose

[1] Mengenangabe bezogen auf das Gemisch aus Kunststoffpulver und Wasser
[2] Mengenangabe bezogen auf eingesetztes Kunststoffpulver
[3] Natriumpolyphosphat (POLYSALZ CA)
[4] Nichtionisches Tensid – Dinonylphenylether eines Polyethylenglykols mit 16 Ethylenoxid-Einheiten (MARLOPHEN®)
[5] Verdickungsmittel – 30 Gew.-%ige Lösung eines Vinylpyrrolidon-Copolymeren (COLLACRAL® VL)
[6] Verdickungsmittel – 25 Gew.-%ige Lösung eines Polyacrylats (LATECOLL® D)
[7] Absetzen des Feststoffes
(Angegeben wird der Anteil (in %) der feststofffrei gewordenen klaren Schicht).

Korrosionsschutztest von Überzügen (Tabelle 2). Überzugsmittel hergestellt entsprechend Versuch 3 bzw. A (Tabelle 1) – jedoch mit unterschiedlichen Mengen Natriumpolyphosphat – werden auf Bonder-Bleche gespritzt und dann bei 185°C/10 min eingebrannt; anschliessend werden die überzogenen Bleche bei 40°C in Wasser gelagert.

Tabelle 2

| Ver-such | Schicht-dicke | NaPP[1] [%][2] | Änderung der Überzugseigenschaften bei Wasserlagerung (40°C) nach 1 Tag Schicht | Blasen[3] | Schlagtiefe[4] cm · Kg | (in · lbs) | 14 Tagen Schicht | Blasen | Schlagtiefe cm · Kg | (in · lbs) |
|---|---|---|---|---|---|---|---|---|---|---|
| 3/I | 70 µm | 0,5 | transparent | – | >137,6 | (>160) | transparent | – | >137,6 | (>160) |
| 3/II | 75 µm | 2 | transparent | – | >137,6 | (>160) | etwas trübe | m2/g2 | >137,6 | (>160) |
| A/I | 75 µm | 6 | trübe | m3/g4 | 86 | (100) | brüchig | m5/g5 | < 3,44 | (< 4) |

[1] NaPP = Natriumpolyphosphat
[2] bezogen auf das Kunststoffpulver
[3] nach DIN 53 209
[4] nach ASTM D 2794

Alle mit Buchstaben gekennzeichneten Versuche sind nicht erfindungsgemäss.

**Patentansprüche**

1. Wässriges Überzugsmittel, welches durch Einbringen von

a) einem Kunststoffpulver,
b) einem Salz einer Polyphosphorsäure,
c) einem Verdickungsmittel,
d) weiteren Hilfs- und Zusatzstoffen
in Wasser und durch Mischen der Komponenten im Wasser erhalten wird, dadurch gekennzeichnet, dass

A. Komponente a) in einer Menge von 20 bis 60 Gew.-% bei einem Korndurchmesser von 5 bis 30 µm,

B. Komponente b) in einer Menge von 0,2 bis 5 Gew.-%,

C. Komponente c) in einer Menge von 0,03 bis 1 Gew.-% und

D. ein Stoff der Komponente d) ein nichtionisches Tensid ist und in einer Menge von 0,1 bis 1 Gew.-%

enthalten ist, wobei sich die Mengenangaben der Komponente a) auf das Gemisch aus Kunststoffpulver und Wasser und die der Komponenten b) bis d) auf das Kunststoffpulver beziehen.

2. Wässriges Überzugsmittel nach Anspruch 1, dadurch gekennzeichnet, dass als Komponente a) thermoplastische Kunststoffe eingesetzt werden.

3. Wässriges Überzugsmittel nach Anspruch 1, dadurch gekennzeichnet, dass als Komponente a) thermoplastische Polyamide oder Polyester eingesetzt werden.

4. Wässriges Überzugsmittel nach Anspruch 1 bis 3, dadurch gekennzeichnet, dass die Komponente a) in einer Menge von 30 bis 50 Gew.-% enthalten ist.

5. Wässriges Überzugsmittel nach Anspruch 1 bis 4, dadurch gekennzeichnet, dass die Komponente b) in einer Menge von 0,5 bis 3 Gew.-% enthalten ist.

6. Wässriges Überzugsmittel nach Anspruch 1 bis 5, dadurch gekennzeichnet, dass die Komponente c) in einer Menge von 0,03 bis 0,5 Gew.-% enthalten ist.

7. Wässriges Überzugsmittel nach Anspruch 1 bis 6, dadurch gekennzeichnet, dass das nichtionische Tensid gemäss D. in einer Menge von 0,1 bis 0,5 Gew.-% enthalten ist.

8. Verwendung der Überzugsmittel nach Anspruch 1 bis 7 zum Überziehen von Metall-, Glas- oder Keramikoberflächen.

**Claims**

1. An aqueous coating composition which is obtained by bringing the following components:
a) a plastics powder,
b) a salt of a polyphosphoric acid,
c) a thickening agent,
d) one or more further assistants or additives,
together in water and mixing the components in water, characterised in that
A) component a) is present in an amount of 20 to 60% by weight and at a particle diameter of 5 to 30 µm,
B) component b) is present in an amount of 0.2 to 5% by weight,
C) component c) is present in an amount of 0.03 to 1% by weight, and
D) one ingredient of component d) is a nonionic surfactant and is present in an amount of 0.1 to 1% by weight,
the percentage of component a) being based on the mixture of plastics powder and water and the percentages of components b) to d) being based on the plastics powder.

2. An aqueous coating composition according to claim 1, characterised in that a thermoplastics material is used as component a).

3. An aqueous coating composition according to claim 1, characterised in that a thermoplastic polyamide or polyester is used as component a).

4. An aqueous coating composition according to any of claims 1 to 3, characterised in that component a) is present in an amount of 30 to 50% by weight.

5. An aqueous coating composition according to any of claims 1 to 4, characterised in that component b) is present in an amount of 0.5 to 3% by weight.

6. An aqueous coating composition according to any of claims 1 to 5, characterised in that component c) is present in an amount of 0.03 to 0.5% by weight.

7. An aqueous coating composition according to any of claims 1 to 6, characterised in that the nonionic surfactant according to D is present in an amount of 0.1 to 0.5% by weight.

8. The use of a coating composition according to any of claims 1 to 7 for coating metal, glass or ceramic surfaces.

**Revendications**

1. Agent de revêtement aqueux que l'on obtient en introduisant dans de l'eau
a) une poudre de matière synthétique,
b) un sel d'un acide polyphosphorique,
c) un épaississant,
d) d'autres adjuvants et additifs
et en mélangeant les constituants dans l'eau, caractérisé par le fait que

A. le constituant a) est contenu à raison de 20 à 60% en poids avec un diamètre de grain de 5 à 30 µm,

B. le constituant b) à raison de 0,2 à 5% en poids,

C. le constituant c) à raison de 0,03 à 1% en poids, et

D. qu'un corps du constituant d) est un surfactif non ionique et est contenu à raison de 0,1 à 1% en poids,

les indications de quantité du constituant a) se rapportant au mélange de poudre de matière synthétique et d'eau et celles des constituants b) à d), à la poudre de matière synthétique.

2. Agent de revêtement aqueux selon la revendication 1, caractérisé par le fait que comme constituant a), on utilise des matières synthétiques thermoplastiques.

3. Agent de revêtement aqueux selon la revendication 1, caractérisé par le fait que comme constituant a), on utilise des polyamides ou polyesters thermoplastiques.

4. Agent de revêtement aqueux selon les revendications 1 à 3, caractérisé par le fait que le constituant a) est contenu à raison de 30 à 50% en poids.

5. Agent de revêtement aqueux selon les revendications 1 à 4, caractérisé par le fait que le constituant b) est contenu à raison de 0,5 à 3% en poids.

6. Agent de revêtement aqueux selon les revendications 1 à 5, caractérisé par le fait que le constituant c) est contenu à raison de 0,03 à 0,5% en poids.

7. Agent de revêtement aqueux selon les revendications 1 à 6, caractérisé par le fait que le surfactif non ionique selon D. est contenu à raison de 0,1 à 0,5% en poids.

8. Utilisation des agents de revêtement selon les revendications 1 à 7 pour le revêtement de surfaces de métal, de verre ou de céramique.